# EUROPEAN PATENT APPLICATION

(11) **EP 4 799 919 A1**
(43) Date of publication of application: **02.09.2026**
(21) Application number: 24882572.1
(22) Date of filing: 27.06.2024
(51) Int. Cl.: B63B 79/15, B63B 1/06, B63B 73/40, B63B 35/08, G01S 15/10, G01C 13/00

(54) **ECHO SOUNDER FOR POLAR SAILING SHIP, INSTALLATION STRUCTURE THEREOF, AND SHIP IN WHICH SAME IS INSTALLED**

(30) Priority: 26.10.2023 KR 20230144408; 26.10.2023 KR 20230144409
(71) Applicant: Hanwha Ocean Co., Ltd., Geoje-si, Gyeongsangnam-do 53302 (KR)
(72) Inventor: KIM, Sung Pyo, Incheon 21982 (KR); LEE, Young Bum, Seoul 01197 (KR); KIM, Byoung Guk, Suwon-si, Gyeonggi-do 16335 (KR); LIM, Ho Jeong, Seoul 03732 (KR); LEE, Jun Hyeok, Siheung-si, Gyeonggi-do 15010 (KR); JANG, Chang Ho, Seoul 03115 (KR); EOM, Myeong Jin, Siheung-si, Gyeonggi-do 15011 (KR)
(74) Representative: Cabinet Beau de Loménie
(86) International application number: PCT/KR2024/008930
(87) International publication number: WO 2025/089540

(57) **Abstract**

A polar ship is disclosed. The polar ship includes: a plough formed at a lower portion of a bow of the ship; and an echo sounder provided to the plough and configured to transmit ultrasonic pulses toward a seabed, receive the ultrasonic pulses reflected back from the seabed, and calculate a depth of the seabed based on a time taken for the ultrasonic pulses to return.

## Description

### [Technical Field]

The present invention relates to an echo sounder for polar ships and, more particularly, to an echo sounder unaffected by air bubbles moving to a hull bottom due to a unique hull form of a polar ship, an installation structure of the same, and a ship including the same.

### [Background Art]

An echo sounder is a device that is installed on a bottom of a ship to measure water depth by emitting ultrasonic pulses toward a seabed and measuring the time taken for the ultrasonic pulses to reflect off the seabed and return. When air bubbles generated around a hull due to movement of the ship or other factors pass over the echo sounder, the echo sounder can suffer from interference with transmission and reception of ultrasonic pulses, making normal operation of the echo sounder difficult.

Accordingly, to avoid disruption of operation of the echo sounder due to air bubbles entrained below the surface of water due to waves generated at a waterline, it is generally recommended to install the echo sounder on a horizontal surface at a foremost portion of a bow bottom. Furthermore, for ships equipped with a bow thruster, it is recommended to install the echo sounder farther forward than the bow thruster to avoid influence thereof.

Meanwhile, reduction of Arctic sea ice due to global warming has opened up a new sea route in the Arctic, known as the Northern Sea Route (NSR), drawing significant attention. For Korea, which relies on maritime trade for more than 99% of its total trade volume, transporting goods via the Northern Sea Route represents a valuable opportunity to create new added value.

Accordingly, studies on various polar environments, including collection of sea ice information using satellites, acquisition of data using research icebreakers, and the like, are being conducted to establish safe navigation methods and identify optimal routes for ships sailing the Northern Sea Route.

### [Disclosure]

### [Technical Problem]

Recently, the present applicant has constructed and operated a ship, specifically, a polar ship, in which an angle between a bow profile and a waterline is 90 degrees or less. As a result, the present applicant has found that an echo sounder provided to an icebreaker capable of navigation in polar regions fails to function properly due to a unique bow hull form of the ship, which has led to the present invention.

Specifically, since a bow hull form of a polar ship is designed such that a tangent line to a cross-sectional profile of a hull is inclined at a small angle with respect to a waterline in consideration of ice-breaking performance, that is, the ability to move forward while breaking through ice, the hull of the polar ship is wider and flatter than that of general merchant ships, thus allowing air bubbles generated by bow waves to exhibit a distinct tendency to flow to a bottom of the hull along an inclined surface of the hull. The present applicant has found that, due to such flow characteristics, as the speed of the ship increases, the volume of air bubbles flowing along a bottom surface of the hull increases, impairing operation of the echo sounder installed on a bow bottom.

Based on these findings, the present invention is aimed at providing an echo sounder installed on a hull bottom of a polar ship to measure water depth, a method of installing the same, an installation structure of the same, and a ship including the same.

It is another object of the present invention to provide an echo sounder unaffected by air bubbles moving to a hull bottom at a bow of a polar ship, an installation structure of the same, and a ship including the same.

It is a further object of the present invention to provide an echo sounder which does not disrupt operation of a polar ship, an installation structure of the same, and a ship including the same.

It is yet another object of the present invention to provide an echo sounder which can be implemented with minimal modifications to a typical structure of a polar ship, an installation structure of the same, and a ship including the same.

### [Technical Solution]

In accordance with one aspect of the present invention, a polar ship may include a plough and an echo sounder. The plough may be formed at a lower portion of a bow of the ship. The echo sounder may be provided inside the plough. The echo sounder may transmit ultrasonic pulses toward a seabed. The echo sounder may receive the ultrasonic pulses reflected back from the seabed. The echo sounder may calculate a depth of the seabed based on a time taken for the ultrasonic pulses to return.

Specifically, the echo sounder unit may include a sounder body and a bracket. The bracket may couple the sounder body to a lower portion of the plough.

In addition, the plough unit may include a plough body and a plough through-hole. The plough through-hole may be formed at a lower portion of the plough body to provides a passage for ultrasonic pulses transmitted and received by the echo sounder unit to travel to an outside of the plough body.

For example, a lower end of the echo sounder may be placed flush with a lower end of the plough in a height direction of the ship.

In addition, the echo sounder may be further provided at a lower portion of a skeg of the ship.

The plough may have a flat region formed at a lower portion thereof.

For example, the plough may be formed in a cut-off shape.

In addition, the plough may include a flat region formed on a cut-off structure.

For example, a bottom of the polar ship may be formed in a flat shape.

Specifically, a flat region formed on the bottom of the ship may occupy 50% to 100% of a width of the bottom of the ship in transverse cross-section of the ship.

In accordance with another aspect of the present invention, an echo sounder is used in a polar ship and is installed on a plough formed at a lower portion of a bow of the ship.

For example, the plough may be formed in a cut-off shape.

In accordance with a further aspect of the present invention, a ship in which an angle β formed between a waterline and a bow profile at a point at which the waterline meets the bow profile (forward perpendicular: FP) ranges from 10 degrees to 70 degrees, may include a plough and an echo sounder. The plough may be formed at a lower portion of a bow of the ship. The echo sounder may be installed on the plough.

For example, the plough may be formed in a cut-off shape.

### [Advantageous Effects]

Embodiments of the present invention provide a polar ship including: a plough formed at a lower portion of a bow of the ship; and an echo sounder provided inside the plough and configured to transmit ultrasonic pulses toward a seabed, receive the ultrasonic pulses reflected back from the seabed, and calculate a depth of the seabed based on a time taken for the ultrasonic pulses to return, wherein a lower end of the plough may be placed flush with a bottom of the ship in a height direction of the ship. Thus, the echo sounder unit can stably measure water depth without influence of air bubbles moving along the bow of the polar ship.

The echo sounder unit may include a sounder body and a bracket coupling the sounder body to a lower portion of the plough. This configuration ensures that the sounder body can be detached from the plough for repair or replacement when necessary.

The plough may include: a plough body; and a plough through-hole formed at a lower portion of the plough body to provide a passage for ultrasonic pulses transmitted and received by the echo sounder to travel to an outside of the plough body. This configuration ensures that the echo sounder unit provided inside the plough body can calculate the depth of the seabed by measuring a time of flight of ultrasonic pulses reflected off the seabed.

A lower end of the echo sounder may be placed flush with a lower end of the plough. This configuration prevents the echo sounder unit from protruding outside the plough, which would otherwise cause increased hull resistance or physical damage to the echo sounder (100). In addition, this configuration prevents the echo sounder unit from being recessed in the plough, which would otherwise allow the plough to interfere with transmission and reception of ultrasonic pulses.

The echo sounder may be further provided inside a skeg of the ship. This configuration enables measurement of water depth at both the bow and the stern.

The plough may include a flat region formed at a lower portion thereof. By installing the echo sounder on the flat region, the installation location of the echo sounder can be shifted farther forward in the direction of the bow, thereby allowing the echo sounder to be placed farther away from the flow of air bubbles.

The plough may be formed in a cut-off shape. Thus, the plough can have a smaller size than a plough without a cut-off structure, thereby reducing resistance during navigation of the ship while preventing potential malfunctions of the echo sounder that might occur inside a plough without a cut-off structure.

The plough may include a flat region formed on the cut-off structure. This feature allows the echo sounder to be installed on the flat region of the plough, shifting the installation location of the echo sounder farther forward in the direction of the bow, thereby allowing the echo sounder to be placed farther away from the flow of air bubbles.

Embodiments of the present invention provide an echo sounder intended for use in a polar ship, wherein the echo sounder may be installed on a plough formed at a lower portion of a bow of the ship. This configuration ensures that the echo sounder can stably measure water depth without influence of air bubbles moving along the bow of the polar ship.

The plough may be of a cut-off type. This feature reduces resistance during navigation of the ship by allowing the plough to have a smaller size than a plough without a cut-off structure and prevents potential malfunctions of the echo sounder that could occur in a plough without a cut-off structure.

Embodiments of the present invention provide a ship in which an angle (β) formed between a waterline and a bow profile at a point at which the waterline and the bow profile meet (forward perpendicular: FP) ranges from 10 degrees and 70 degrees, wherein the ship includes: a plough formed at a lower portion of a bow thereof; and an echo sounder installed on the plough. Thus, the echo sounder can stably measure water depth without influence of air bubbles moving along the bow of the polar ship.

The plough may be formed in a cut-off shape. This feature reduces resistance during navigation of the ship by allowing the plough to have a smaller size than a plough without a cut-off structure and prevents potential malfunctions of the echo sounder that could occur in a plough without a cut-off structure.

Herein, the term "ship" is intended to include not only polar ships but also general merchant ships.

### [Description of Drawings]

FIG. 1 is a side view of a polar ship, illustrating a bow hull form and behavior of air bubbles.
FIG. 2 is a perspective view of an echo sounder installation structure for polar ships according to one embodiment of the present invention.
FIG. 3 is a side view of the echo sounder installation structure of FIG. 2.
FIG. 4 is an enlarged longitudinal cross-sectional view of a skeg of FIG. 3 according to one embodiment.
FIG. 5 is an enlarged transverse cross-sectional view of the skeg of FIG. 3 according to another embodiment.
FIG. 6 is an enlarged longitudinal cross-sectional view of the skeg of FIG. 3 according to the other embodiment.
FIG. 7 is a side view of an echo sounder installation structure for polar ships according to another embodiment of the present invention.
FIG. 8 is a side view of an echo sounder installation structure for polar ships according to a further embodiment of the present invention.
FIG. 9 is a front view of an echo sounder installation structure for polar ships according to yet another embodiment of the present invention.
FIG. 10 is a side view of the echo sounder installation structure of FIG. 9.
FIG. 11 is a bottom view of the echo sounder installation structure of FIG. 9.
FIG. 12 is an enlarged longitudinal sectional view of a keel of FIG. 10.
FIG. 13 is a block flow diagram illustrating a method of installing an echo sounder for ships according to the present invention.
FIG. 14 is an analysis view illustrating a fluid analysis step of FIG. 13.
FIG. 15 is a photographic view illustrating a distribution identification step of FIG. 13.
FIG. 16 shows transverse cross-sectional views of different types of ships, taken at a location corresponding to 10% of the length of each ship in a direction from a forward end of a bow toward a stern.
FIG. 17 shows longitudinal cross-sectional views of bow profiles of different types of ships.
FIG. 18 is a transverse cross-sectional view of a polar ship according to the present invention, taken at a location corresponding to 10% of the length of the ship in a direction from a forward end of a bow toward a stern.
FIG. 19 is a longitudinal cross-sectional view of a bow profile of a polar ship according to the present invention.

### [Best Mode]

In order to fully appreciate the operational advantages of the present invention and the objectives achieved by practicing the present invention, reference should be made to the accompanying drawings, which illustrate preferred embodiments of the present invention, and description thereof.

Hereinafter, exemplary embodiments of the present invention will be described in detail in terms of the features and effects thereof with reference to the accompanying drawings. It should be noted that like components will be denoted by like reference numerals throughout the specification and the accompanying drawings.

Herein, a front of a hull refers to a bow direction of the hull and a rear of the hull refers to a stern direction of the hull.

Herein, an upper end of a hull refers to an upper deck of the hull and a side surface of the hull refers to a side shell of the hull.

Herein, a length of a hull refers to a distance from a bow to a stern in a direction parallel to an upper deck of the hull.

Herein, a width of the hull refers to a distance from one side shell to the other side shell in a direction parallel to an upper deck of the hull.

Herein, a height of the hull refers to a distance from an upper deck of the hull to a bottom of the hull in a direction orthogonal to the upper deck of the hull.

Herein, a transverse cross-section refers to a cross-section of the hull, taken in a transverse direction of the hull.

Herein, a longitudinal cross-section refers to a cross-section of the hull, taken in a longitudinal direction of the hull.

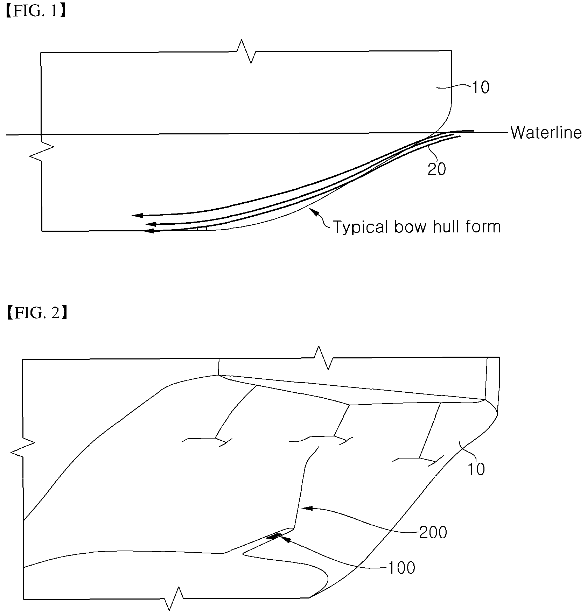

FIG. 1 is a side view of a polar ship, illustrating a bow hull form and behavior of air bubbles.

Referring to FIG. 1, the bow hull form of the polar ship 10 may be designed such that an angle between a bow and a waterline is smaller than that of a general ship in consideration of ice-breaking performance, that is, the ability to move forward while breaking through ice. Accordingly, air bubbles 20 generated at the waterline can move to a bottom of the ship 10 along an inclined surface of the bow.

An echo sounder is installed on a horizontal surface at the bottom of the ship 10 and is configured to transmit ultrasonic pulses toward a seabed and to receive the ultrasonic pulses reflected back from the seabed. The echo sounder may calculate a depth of the seabed by measuring a time taken for the emitted ultrasonic pulses to return.

However, in the polar ship 10, air bubbles 20 moving to the bottom of the ship 10 can interfere with transmission and reception of ultrasonic pulses by the echo sounder while passing around the echo sounder. Addressing such problems associated with operation of the echo sounder becomes significantly challenging if the problems are only discovered after construction of the ship 10. Therefore, there is a need for an echo sounder for polar ships that is unaffected by air bubbles moving to a bottom of a hull, a ship including the same, a method of determining an installation location of the same, an installation structure of the same, and a method of installing the same.

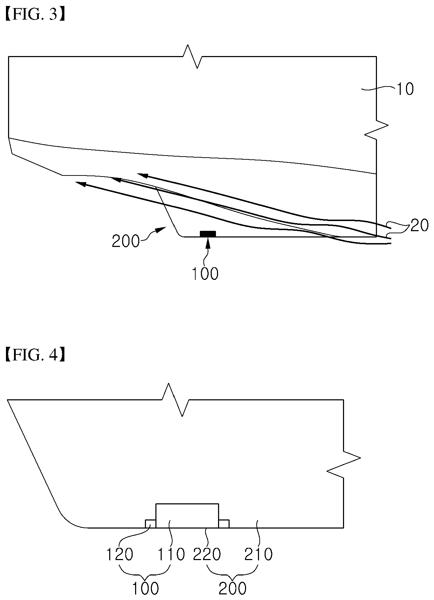

FIG. 2 is a perspective view of an echo sounder installation structure for polar ships according to one embodiment of the present invention, FIG. 3 is a side view of the echo sounder installation structure for polar ships according to this embodiment, and FIG. 4 is an enlarged longitudinal cross-sectional view of a skeg of FIG. 3 according to one embodiment.

Referring to FIG. 1 to FIG. 4, the echo sounder installation structure for polar ships according to this embodiment may include an echo sounder 100 and a skeg 200. The echo sounder 100 may be installed on the skeg 200 formed at a stern of a polar ship 10, preferably inside the skeg 200, to stably measure water depth without influence of air bubbles 20 moving along a bow of the polar ship 10.

The echo sounder 100 may be provided to the skeg 200, preferably inside the skeg 200. The echo sounder 100 may transmit ultrasonic pulses toward the seabed. The echo sounder 100 may receive the ultrasonic pulses reflected back from the seabed. Thus, the echo sounder 100 can calculate a depth of the seabed based on a time taken for the ultrasonic pulses to return.

The ship 10 may be formed with a plurality of skegs 200. Here, the echo sounder 100 may be provided to only one of the skegs 200. This configuration ensures accurate measurement of water depth by preventing cross-interference between respective ultrasonic pulses emitted from a plurality of echo sounders 100.

Generally, the echo sounder 100 is susceptible to malfunctions caused by air bubbles 20 entrained below the surface of water due to waves generated at a waterline. Accordingly, the echo sounder 100 is generally installed on a bottom of the ship at a forward end of the bow.

In addition, when the ship 10 is formed with a bow thruster (not shown), the echo sounder 100 may be installed farther forward than the bow thruster to avoid influence of the bow thruster. In addition, to address problems caused by air bubbles 20, the ship 10 may be formed at a lower portion thereof with a box keel (not shown) structure in which the echo sounder 100 is installed.

However, since the polar ship 10 is designed such that the bow is inclined at a small angle with respect to the waterline in consideration of ice-breaking performance, the echo sounder 100 can still suffer from interference from air bubbles 20 even when the echo sounder is installed at the forward end of the bow. Moreover, employing the box keel structure can lead to adverse effects, including increased hull resistance and reduced structural strength of the hull.

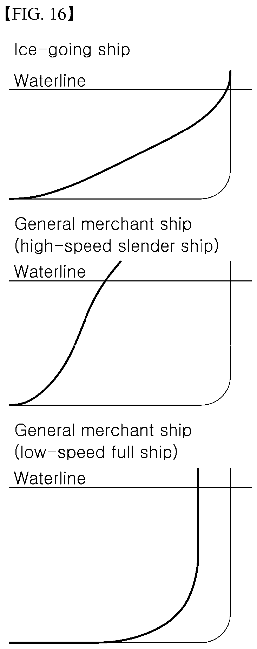

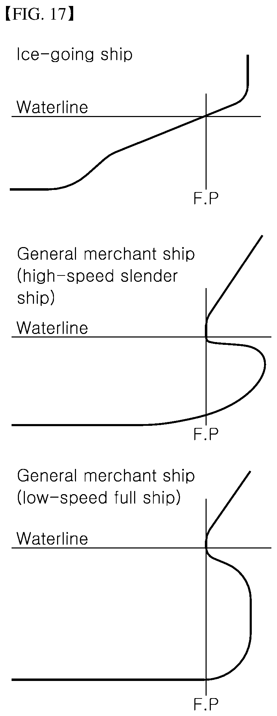

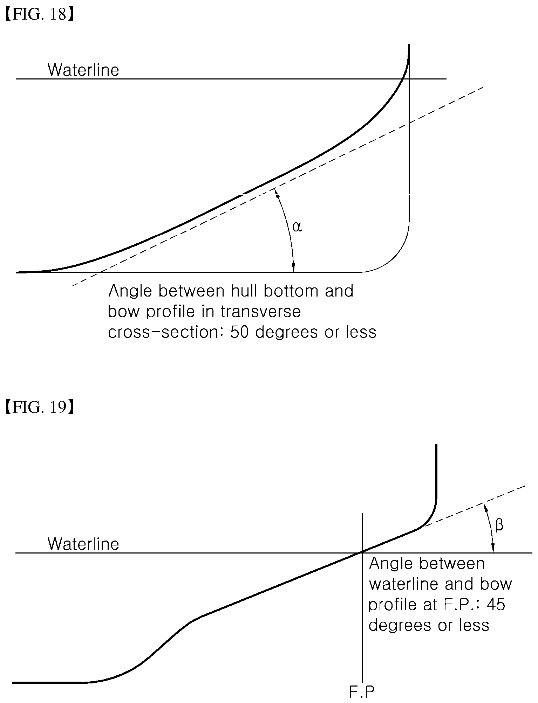

Referring to FIG. 16 to FIG. 19, for the polar ship according to the present invention, an angle formed between the bow and the hull bottom in transverse cross-section taken at a location corresponding to 10% of a length of the ship in a direction from the forward end of the bow end toward the stern (that is, an angle (α) measured as shown in FIG. 18) is relatively shallow, measuring 70 degrees or less, preferably 50 degrees or less, to achieve ice-breaking. Conversely, for general ships, an angle formed between a waterline and a bow profile at forward perpendicular is 90 degrees or more in longitudinal cross-section of the bow, or the bow has a bulb protruding therefrom.

In addition, for icebreakers operating in polar regions, an angle β measured as shown in FIG. 19 (that is, an angle formed between a waterline and a bow profile at a location at which the waterline meets the bow profile (forward perpendicular: FP)) is shallow, measuring 70 degrees or less, preferably 50 degrees or less, more preferably 45 degrees or less. However, a lower limit of the angle β may be appropriately selected in consideration of ship operation, hull construction, ice-breaking performance, and the like. It is desirable that the lower limit of the angle β be 10 degrees or more, excluding local flat regions (0 degrees).

In a ship 10 in which the angle β is 70 degrees or less, preferably 50 degrees or less, particularly 45 degrees or less, air bubbles 20 tend to flow to a hull bottom. Thus, the echo sounder 100 according to embodiments of the invention offers significant advantages for such a ship 10. In general merchant ships, the angle β is generally about 90 degrees.

A convexly protruding structure formed at the bow is referred to as a "bulb" or "bulbous bow", and icebreakers operating in polar regions may lack the bulbous bow. Accordingly, in such a ship having a shallow bow angle as described above, air bubbles generated at the bow tend to flow to the echo sounder along a bottom surface of the bow, disrupting the function of the echo sounder.

The echo sounder 100 may include a sounder body 110 and a bracket 120. The sounder body 110 may be coupled to an interior of the skeg 200 by the bracket 120. Thus, the sounder body 110 can be separated from the skeg 200 for repair or replacement when necessary.

The bracket 120 may couple the sounder body 110 to a lower portion of the skeg 200. The sounder body 110 may be coupled to the bracket 120 by mechanical fastening using bolts/nuts. Alternatively, the sounder body 110 may be coupled to the bracket 120 by interference fit. Thus, the sounder body 110 can be detachably coupled to the bracket 120.

The bracket 120 may be coupled to the lower portion of the skeg 200 by mechanical fastening using bolts/nuts. Alternatively, the bracket 120 may be coupled to the lower portion of the skeg 200 by welding. Thus, the bracket 120 can be firmly secured to the lower portion of the skeg 200.

It should be understood that the present invention is not limited to the illustrations or descriptions set forth above. These are merely exemplary and are not intended to limit the scope of the invention.

Referring to FIG. 1 to FIG. 4, the skeg 200 according to this embodiment may be formed at a lower portion of the stern of the ship 10. Thus, the skeg 200 can improve propulsion efficiency of an engine of the ship 10. The skeg 200 may include a skeg body 210 and a skeg through-hole 220.

The skeg through-hole 220 may be formed at a lower portion of the skeg body 210. The skeg through-hole 220 provides a passage for ultrasonic pulses transmitted and received by the echo sounder 100 to travel beyond the skeg body 210. Thus, the echo sounder 100 provided inside the skeg body 210 can calculate the depth of the seabed by measuring a time of flight of ultrasonic pulses reflected from the seabed.

A lower end of the echo sounder 100 may be placed flush with a lower end of the skeg 200 in a height direction of the ship. This configuration prevents the echo sounder 100 from protruding outside the skeg 200, which would otherwise cause increase in resistance of the ship 10 or damage to the echo sounder 100. Furthermore, this configuration prevents the echo sounder 100 from being recessed inside the skeg 200, which would otherwise allow the echo sounder 100 to interfere with transmission and reception of ultrasonic pulses.

A lower portion of the echo sounder 100 may have the same shape as the skeg through-hole 220. This configuration prevents gap formation between the echo sounder 100 and the skeg through-hole 220. Accordingly, seawater can be prevented from entering the interior of the skeg 200.

A sealing member (not shown) may be interposed between the lower portion of the echo sounder 100 and the skeg through-hole 220. This configuration more reliably prevents seawater from entering the interior of the skeg 200.

It should be understood that the present invention is not limited to the illustrations or descriptions set forth above. These are merely exemplary and are not intended to limit the scope of the invention.

Technical advantages provided by the echo sounder installation structure for polar ships according to this embodiment are as follows.

Since the polar ship 10 is designed such that the bow is inclined at a small angle with respect to the waterline in consideration of ice-breaking performance, the echo sounder 100 can suffer from interference from air bubbles 20 moving from the bow toward the stern along the bottom surface of the ship even when the echo sounder is installed at the forward end of the bow.

In addition, the polar ship 10 may be formed with a protruding skeg 200. This type of skeg 200 may be unaffected by movement of air bubbles 20 during navigation of the ship 10. Accordingly, the echo sounder 100 may be installed on a surface of or inside the skeg 200.

This configuration ensures that the echo sounder 100 can operate without interference from air bubbles 20 generated during navigation of the ship 10, thereby enabling accurate measurement of the depth of the seabed.

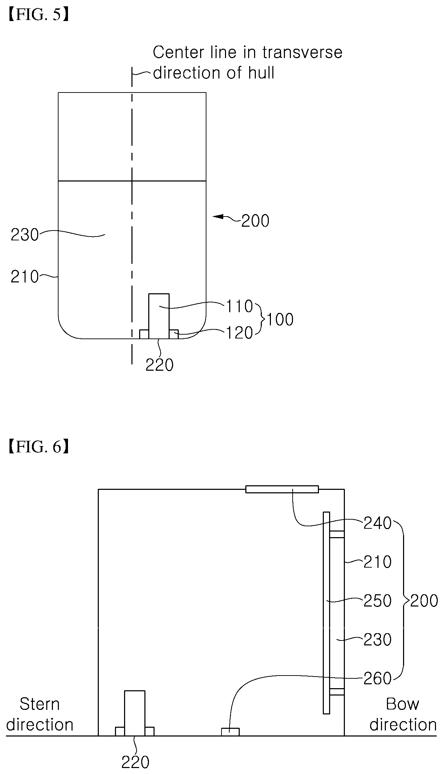

FIG. 5 is an enlarged transverse cross-sectional view of a skeg according to another embodiment different from that of FIG. 3, and FIG. 6 is an enlarged longitudinal cross-sectional view of the skeg according to this embodiment.

Referring to FIG. 1 to FIG. 5, the skeg 200 according to this embodiment may include a chamber 230 formed therein. The chamber 230 may be a space formed inside the skeg 200. Personnel may enter or exit the chamber 230 through a passage formed inside the ship 10. The chamber 230 may include a door 240, a ladder 250, and a drainage unit 260.

When maintenance of the echo sounder 100 is required after completion of or during navigation of the ship 10, personnel may access the echo sounder 100 via the door 240 and the ladder 250. One benefit of installing the echo sounder 100 inside the skeg 200 is elimination of the need to form a separate chamber for installation and operation of the echo sounder 100 inside the ship 10, as the chamber 230 formed inside the skeg 200 can be utilized as a space for installation and operation of the echo sounder 100.

The door 240 may be formed at an upper portion of the chamber 230 to be openable and closable. Thus, personnel can enter an interior of the chamber 230. Preferably, the door 240 is coupled to the chamber 230 by a hinge (not shown) such that the door 240 swings in an outward direction of the chamber 230 when opened.

The ladder 250 may be formed at one side of the chamber 230. Thus, personnel entering the chamber 230 through the door 240 can descend to a bottom of the chamber 230 through the ladder 250. The ladder 250 may be formed of a material having corrosion resistance and rigidity to withstand corrosion and damage caused by seawater entering the chamber 230.

The drainage unit 260 may be formed at the bottom of the chamber 230. The drainage unit 260 can discharge seawater entering the chamber 230 to an exterior of the chamber 230. Thus, personnel can enter the chamber 230 to operate or repair the echo sounder 100.

Seawater entering the chamber 230 may be discharged to an exterior of the ship 10 through the drainage unit 260. Alternatively, seawater entering the chamber 230 may be moved to another space within the ship 10 through the drainage unit 260.

Technical advantages provided by the skeg 200 according to this embodiment are as follows.

The ship 10 may be provided with a separate compartment to protect the echo sounder 100 against possible accidents during navigation of the ship 10, such as flooding. Such a separate compartment may be formed in a size ensuring that personnel can access and carry out necessary maintenance or repair work on the echo sounder 100.

When the echo sounder 100 is installed in a center skeg 200 formed at the stern of the ship 10, it is possible to eliminate the need to form a separate compartment in the ship 10, as the center skeg 200 itself serves as a dedicated compartment for the echo sounder 100.

Thus, it is possible to reduce costs associated with formation of a separate compartment while enabling more efficient space utilization within the ship 10.

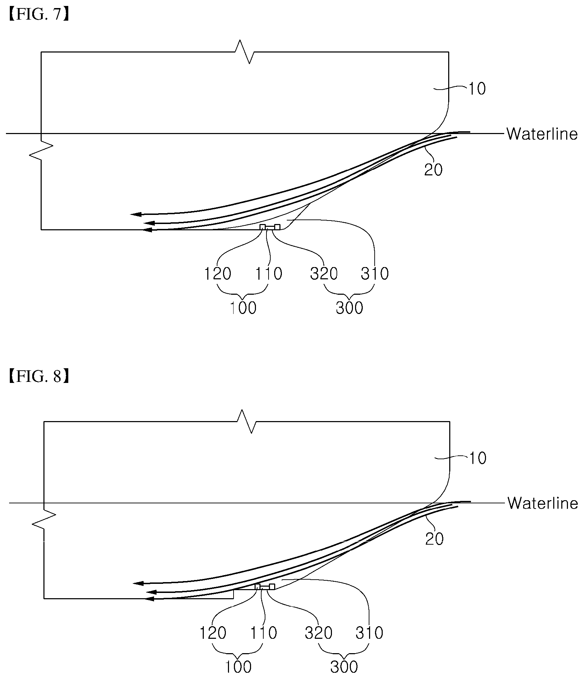

FIG. 7 is a side view of an echo sounder installation structure for polar ships according to another embodiment of the invention.

Referring to FIG. 1 to FIG. 7, the echo sounder installation structure for polar ships according to this embodiment may include an echo sounder 100 and a plough 300. The echo sounder 100 may be installed inside the plough 300 formed in a fin-like shape at the bow of the ship 10 to stably measure water depth without influence of air bubbles 20 moving along the bow of the polar ship 10.

During navigation in ice-covered waters, the polar ship frequently encounters a phenomenon in which broken ice pieces flow under the bow and accumulate on the bottom surface of the bow without flowing out toward the stern, which leads to increased resistance. The plough 300 formed to protrude from a lower portion of the bow profile can prevent such accumulation of ice pieces, thereby suppressing increase in resistance. The shape of the plough 300 may be designed in consideration of both ice-breaking performance and hull resistance during navigation in open waters.

While rarely applied to general merchant ships, the plough 300 may be used in polar ships to provide a protruding hull form so as to ensure a smooth flow of ice pieces as described above. The plough 300 includes a strength-reinforcing member formed therein and a flat region formed on a lower surface thereof. When the echo sounder 100 is installed on the flat region, an installation location of the echo sounder 100 is shifted farther forward in the direction of the bow, thereby reducing errors during operation of the echo sounder 100, as air bubbles 20 flow behind the plough 300 and thus do not pass through the shifted location.

The echo sounder 100 may be disposed on or inside the plough 300. The echo sounder 100 may transmit ultrasonic pulses toward the seabed. The echo sounder 100 may receive the ultrasonic pulses reflected back from the seabed. Thus, the echo sounder 100 can calculate a depth of the seabed based on a time taken for the ultrasonic pulses to return.

The echo sounder 100 may include a sounder body 110 and a bracket 120. The sounder body 110 may be coupled to an interior of the plough 300 by the bracket 120. Thus, the sounder body 110 can be separated from the plough 300 for repair or replacement when necessary.

The bracket 120 may couple the sounder body 110 to a lower portion of the plough 300. The sounder body 110 may be coupled to the bracket 120 by mechanical fastening using bolts/nuts. Alternatively, the sounder body 110 may be coupled to the bracket 120 by interference fit. Thus, the sounder body 110 can be detachably coupled to the bracket 120.

The bracket 120 may be coupled to the lower portion of the plough 300 by mechanical fastening using bolts/nuts. Alternatively, the bracket 120 may be coupled to the lower portion of the plough 300 by welding. Thus, the bracket 120 can be firmly secured to the lower portion of the plough 300.

The echo sounder 100 may be further provided inside a skeg 200 of the ship 10. Accordingly, the echo sounder 100 may be installed at each of the bow and the stern of the ship 10.

Referring to FIG. 1 to FIG. 7, the plough 300 according to this embodiment may be formed at a lower portion of the bow of the ship 10. The echo sounder 100 may be installed inside the plough 300 formed in a fin-like shape at the bow of the ship 10 to stably measure water depth without influence of air bubbles 20 moving along the bow of the polar ship 10.

In addition, the plough 300 can enhance ice-breaking performance of the ship 10. The plough 300 may include a plough body 310 and a plough through-hole 320.

The plough through-hole 320 may be formed at a lower portion of the plough body 310. The plough through-hole 320 provides a passage for ultrasonic pulses transmitted and received by the echo sounder 100 to travel beyond the plough body 310. Thus, the echo sounder 100 disposed inside the plough body 310 can calculate the depth of the seabed by measuring a time of flight of ultrasonic pulses reflected from the seabed.

A lower end of the echo sounder 100 may be placed flush with a lower end of the plough 300 in the height direction of the ship. This configuration prevents the echo sounder 100 from protruding outside the plough 300, which would otherwise cause increase in resistance of the ship 10 or damage to the echo sounder 100. Furthermore, this configuration prevents the echo sounder 100 from being recessed inside the plough 300, which would otherwise allow the plough 300 to interfere with transmission and reception of ultrasonic pulses.

A lower portion of the echo sounder 100 may be formed in the same shape as the plough through-hole 320. This configuration prevents gap formation between the echo sounder 100 and the plough through-hole 320. Accordingly, seawater can be prevented from entering an interior of the plough 300. A sealing member (not shown) may be interposed between the lower portion of the echo sounder 100 and the plough through-hole 320. This configuration more reliably prevents seawater from entering the interior of the plough 300.

It should be understood that the present invention is not limited to the illustrations or descriptions set forth above. These are merely exemplary and are not intended to limit the scope of the invention.

Technical advantages provided by the echo sounder installation structure for polar ships according to this embodiment are as follows.

Since the polar ship 10 is designed such that the angle between the bow and the waterline is smaller than that of general ships in consideration of ice-breaking performance, the echo sounder 100 can suffer from interference from air bubbles 20 even when the echo sounder is installed on a horizontal bottom surface at the front end of the bow. However, when the echo sounder 100 is installed at the bow, influence of water depth can be more rapidly identified during navigation of the ship 10 than when the echo sounder 100 is installed at the stern.

Accordingly, a protruding plough 300 may be formed at the bow of the ship 10. A horizontal bottom surface of this type of plough is placed farther forward in the direction of the bow and thus can be unaffected by movement of air bubbles 20 during navigation of the ship 10. Accordingly, the echo sounder 100 may be installed inside the horizontal bottom surface of the plough 300.

As such, when the echo sounder 100 is installed inside the plough 300, the echo sounder 100 can operate without interference from air bubbles 20 generated during navigation of the ship 10, thereby enabling accurate measurement of the depth of the seabed. Furthermore, combining installation of one echo sounder 100 inside the plough of the bow with installation of another echo sounder 100 at the stern is more advantageous from the perspective of collision avoidance during actual navigation by enabling measurement of water depth at the bow.

In other words, given that air bubbles 20 entrained under the bow can be scattered by forming a plough 300 having a certain volume at the lower end of the bow, installing the echo sounder 100 at a lower end of the plough 300 can prevent the echo sounder 100 from malfunctioning by eliminating the influence of the air bubbles 20 on the echo sounder 100. Furthermore, the plough 300 contributes to enhancing ice-breaking performance by removing ice accumulation on the bottom of the ship during ice-breaking navigation.

FIG. 8 is a side view of an echo sounder installation structure for polar ships according to a further embodiment of the invention.

Referring to FIG. 1 to FIG. 6 and FIG. 8, the echo sounder installation structure for polar ships according to this embodiment may include an echo sounder 100 and a plough 300. The echo sounder 100 may be installed inside the plough 300 formed in a fin-like shape at the bow of the ship 10 to stably measure water depth without influence of air bubbles 20 moving along the bow of the polar ship 10.

The echo sounder 100 may be disposed inside the plough 300. The echo sounder 100 may transmit ultrasonic pulses toward the seabed. The echo sounder 100 may receive the ultrasonic pulses reflected back from the seabed. Thus, the echo sounder 100 can calculate the depth of the seabed based on a time taken for the ultrasonic pulses to return.

The echo sounder 100 may include a sounder body 110 and a bracket 120. The sounder body 110 may be coupled to an interior of the plough 300 by the bracket 120. Thus, the sounder body 110 can be separated from the plough 300 for repair or replacement when necessary.

The bracket 120 may couple the sounder body 110 to a lower portion of the plough 300. The sounder body 110 may be coupled to the bracket 120 by mechanical fastening using bolts/nuts. Alternatively, the sounder body 110 may be coupled to the bracket 120 by interference fit. Thus, the sounder body 110 can be detachably coupled to the bracket 120.

The bracket 120 may be coupled to a lower portion of the plough 300 by mechanical fastening using bolts/nuts. Alternatively, the bracket 120 may be coupled to the lower portion of the plough by welding. Thus, the bracket 120 can be firmly secured to the lower portion of the plough 300.

The echo sounder 100 may be further provided inside a skeg 200 of the ship 10. Accordingly, the echo sounder 100 may be installed at each of the bow and the stern of the ship 10.

Referring to FIG. 1 to FIG. 6 and FIG. 8, the plough 300 according to this embodiment may be formed at a lower portion of the bow of the ship 10. A cut-off structure may be formed in the bow profile. This configuration prevents malfunctions of the echo sounder 100 that could occur when the echo sounder 100 is installed in a plough 300 without such a cut-off structure.

The echo sounder 100 is required to be installed on a flat horizontal surface. When the cut-off structure is formed in the bow profile, an end of the cut-off horizontal surface facing the bow is placed farther forward in the direction of the bow. Accordingly, installing the echo sounder 100 at the corresponding location can reduce the risk of malfunction of the echo sounder by allowing the echo sounder to be placed farther away from the flow of air bubbles. The height and volume of the cut-off structure may be determined in consideration of hull resistance during navigation in open waters and mutual interference between ice and the hull. When the cut-off structure is applied to the plough 300, an installation location of the echo sounder 100 is shifted farther forward in the direction of the bow, despite increase in height of a flat bottom region of the plough 300 toward an upper deck, thereby further reducing the possibility that the echo sounder 100 will encounter air bubbles 20.

In addition, the plough 300 according to this embodiment has a smaller size than a plough 300 without a cut-off structure, thereby reducing hull resistance during navigation of the ship 10. Furthermore, the plough 300 according to this embodiment can enhance ice-breaking performance of the ship 10. The plough 300 may include a plough body 310 and a plough through-hole 320.

The plough through-hole 320 may be formed at a lower portion of the plough body 310. The plough through-hole 320 provides a passage for ultrasonic pulses transmitted and received by the echo sounder 100 to travel beyond the plough body 310. Thus, the echo sounder 100 disposed inside the plough body 310 can calculate the depth of the seabed by measuring a time of flight of ultrasonic pulses reflected from the seabed.

A lower end of the echo sounder 100 may be placed flush with a lower end of the plough 300 in the height direction of the ship. This configuration prevents the echo sounder 100 from protruding outside the plough 300, which would otherwise cause increase in resistance of the ship 10 or damage to the echo sounder 100. Furthermore, this configuration prevents the echo sounder 100 from being recessed inside the plough 300, which would otherwise allow the plough 300 to interfere with transmission and reception of ultrasonic pulses.

A lower portion of the echo sounder 100 may be formed in the same shape as the plough through-hole 320. This configuration prevents gap formation between the echo sounder 100 and the plough through-hole 320. Accordingly, seawater can be prevented from entering the interior of the plough 300.

A sealing member (not shown) may be interposed between the lower portion of the echo sounder 100 and the plough through-hole 320. This configuration more reliably prevents seawater from entering the interior of the plough 300.

It should be understood that the present invention is not limited to the illustrations or descriptions set forth above. These are merely exemplary and are not intended to limit the scope of the invention.

Technical advantages provided by the echo sounder installation structure for polar ships according to this embodiment are as follows.

The polar ship 10 is designed such that the bow is inclined at a small angle with respect to the waterline in consideration of ice-breaking performance. Accordingly, the echo sounder 100 can suffer from interference from air bubbles 20 even when the echo sounder 100 is disposed at a forward end of the bow.

Since the polar ship 10 is designed such that an angle between the bow and the waterline is smaller than that of general ships in consideration of ice-breaking performance, the echo sounder 100 can suffer from interference from air bubbles 20 even when the echo sounder 100 is installed at the forward end of the bow. However, when the echo sounder 100 is installed at the bow, influence of water depth can be more rapidly identified during navigation of the ship 10 than when the echo sounder 100 is installed on the stern.

Accordingly, a protruding plough 300 may be formed at the bow of the ship 10. This type of plough 300 can be unaffected by movement of air bubbles 20 during navigation. Accordingly, the echo sounder 100 may be installed inside the plough 300. In addition, by shifting an installation location of the echo sounder 100 farther forward in the direction of the bow by cutting a lower end of the plough 300, it is possible to ensure normal operation of the echo sounder 100.

In addition, the plough 300 may be formed in a cut-off structure having a predetermined shape.

This configuration reduces the risk of malfunction of the echo sounder 100 that could arise when the echo sounder 100 is installed in a plough 300 without such a cut-off structure. Furthermore, the plough according to this embodiment has a smaller size than a plough 300 without the cut-off structure, thereby reducing resistance during navigation of the ship 10. In addition, the echo sounder installation structure according to this embodiment can ensure accurate measurement of the depth of the seabed by allowing the echo sounder 100 to operate without interference from air bubbles 20 generated during navigation of the ship 10 and can ensure safer navigation than when the echo sounder 100 is installed only at the stern by allowing the echo sounder 100 to be further installed at the bow.

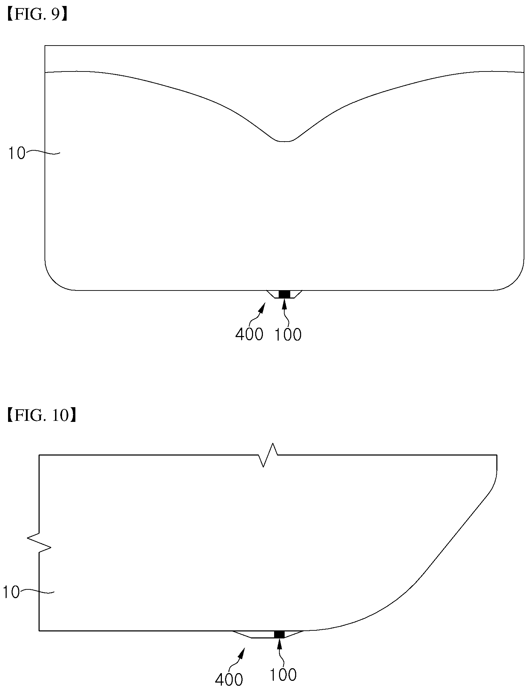

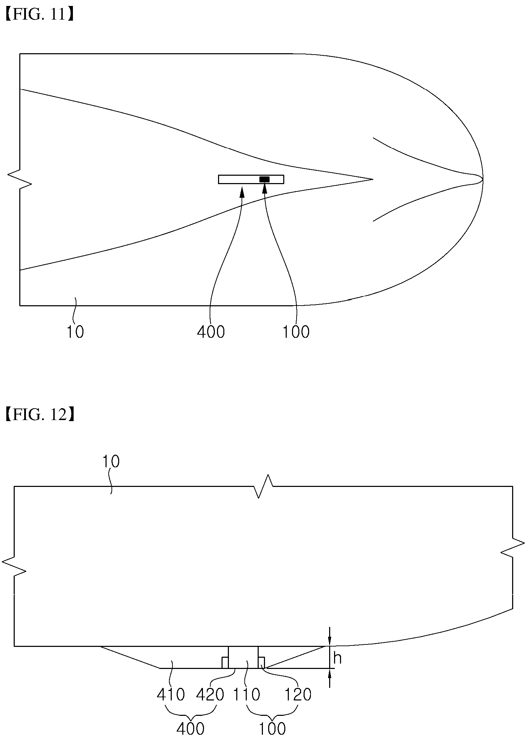

FIG. 9 is a front view of an echo sounder installation structure for polar ships according to yet another embodiment of the invention, FIG. 10 is a side view of the echo sounder installation structure for polar ships according to this embodiment, FIG. 11 is a bottom view of the echo sounder installation structure for polar ships according to this embodiment, and FIG. 12 is an enlarged longitudinal cross-sectional view of a keel of FIG. 10.

Referring to FIG. 1 to FIG. 6 and FIG. 9 to FIG. 12, the echo sounder installation structure for polar ships according to this embodiment may include an echo sounder 100 and a keel 400. The echo sounder 100 may be installed inside the keel 400 formed at a lower portion of the polar ship 10 to stably measure water depth without influence of air bubbles 20 moving along the bow of the ship 10.

The echo sounder 100 may be disposed inside the keel 400. The echo sounder 100 may transmit ultrasonic pulses toward the seabed. The echo sounder 100 may receive the ultrasonic pulses reflected back from the seabed. Thus, the echo sounder 100 can calculate a depth of the seabed based on a time taken for the ultrasonic pulses to return.

The echo sounder 100 may include a sounder body 110 and a bracket 120. The sounder body 110 may be coupled to an interior of the keel 400 by the bracket 120. Thus, the sounder body 110 can be separated from the keel 400 for repair or replacement when necessary.

The bracket 120 may couple the sounder body 110 to a lower portion of the keel 400 protruding from the bottom of the ship. The sounder body 110 may be coupled to the bracket 120 by mechanical fastening using bolts/nuts. Alternatively, the sounder body 110 may be coupled to the bracket 120 by interference fit. Thus, the sounder body 110 can be detachably coupled to the bracket 120.

The bracket 120 may be coupled to the lower portion of the keel 400 by mechanical fastening using bolts/nuts. Alternatively, the bracket 120 may be coupled to the lower portion of the keel 400 by welding. Thus, the bracket 120 can be firmly secured to the lower portion of the keel 400.

Referring again to FIG. 1 to FIG. 6 and FIG. 9 to FIG. 12, the keel 400 according to this embodiment may be formed at a lower portion of the bow of the ship 10. The keel 400 may be formed at a location where a flow of air bubbles 20 is minimized based on fluid analysis described below (computational fluid dynamics (CFD) analysis). Thus, the echo sounder 100 can be unaffected by movement of air bubbles 20 during navigation of the ship 10. Preferably, the keel 400 is installed at a bow side of the ship.

Air bubbles 20 entrained under the hull due to waves generated on a water surface at the bow tend to flow toward the stern along the surface of the hull while forming a layer with a certain thickness. Here, a thickness of this layer may vary depending on the draft and speed of the ship 10 and external sea conditions. When the keel 400 is formed to a height greater than a height of a boundary layer formed by the air bubbles flowing along the surface of the hull and the echo sounder 100 is installed on a flat horizontal surface of the keel 400, it is possible to prevent the echo sounder 100 from malfunctioning due to the air bubbles.

In addition, a lower end of the keel 400 may be placed at a distance of 0.5 m or less from the bottom of the ship 10 in a downward direction of the ship 10. In other words, the keel 400 may be formed to a height (h) of 0.5 m or less. This configuration allows the keel 400 to avoid encounter with the flow of air bubbles 20 while minimizing resistance induced by the keel 400 during navigation of the ship 10. The keel 400 may include a keel body 410 and a keel through-hole 420.

The keel through-hole 420 may be formed at a lower portion of the keel body 410. The keel through-hole 420 provides a passage for ultrasonic pulses transmitted and received by the echo sounder 100 to travel beyond the keel body 410. Thus, the echo sounder 100 disposed inside the keel body 410 can calculate the depth of the seabed by measuring a time of flight of ultrasonic pulses reflected off the seabed.

A lower end of the echo sounder 100 may be placed flush with a lower end of the keel 400 in the height direction of the ship 10. This configuration prevents the echo sounder 100 from protruding outside the keel 400, which would otherwise cause increase in resistance of the ship 10 or damage to the echo sounder 100. Furthermore, this configuration prevents the echo sounder 100 from being recessed inside the keel 400, which would otherwise allow the keel 400 to interfere with transmission and reception of ultrasonic pulses.

A lower portion of the echo sounder 100 may be formed in the same shape as the keel through-hole 420. This configuration prevents gap formation between the echo sounder 100 and the keel through-hole 420. Accordingly, seawater can be prevented from entering the interior of the keel 400. A sealing member (not shown) may be interposed between the lower portion of the echo sounder 100 and the keel through-hole 420. This configuration more reliably prevents seawater from entering the interior of the keel 400. Preferably, the keel is designed with a structure that minimizes increase in resistance and interference by ice.

It should be understood that the present invention is not limited to the illustrations or descriptions set forth above. These are merely exemplary and are not intended to limit the scope of the invention.

Technical advantages provided by the echo sounder installation structure for polar ships according to this embodiment are as follows.

Since the polar ship 10 is designed such that the bow is inclined at a small angle with respect to the waterline in consideration of ice-breaking performance, the echo sounder 100 can suffer from interference from air bubbles 20 even when the echo sounder 100 is installed at a forward end of the bow.

Since the polar ship 10 is designed such that an angle between the bow and the waterline is smaller than that of general ships in consideration of ice-breaking performance, the echo sounder 100 can suffer from interference from air bubbles 20 even when the echo sounder 100 is installed at the forward end of the bow. However, when the echo sounder 100 is installed at the bow, influence of water depth can be more rapidly identified during navigation of the ship 10 than when the echo sounder 100 is installed at the stern.

Accordingly, a keel 400 may be formed at a location on the hull bottom where a flow of air bubbles is minimized based on fluid analysis (CFD analysis). The keel 400 formed at this location can be unaffected by movement of air bubbles 20 during navigation of the ship 10. Accordingly, the echo sounder 100 may be installed inside the keel 400.

This configuration ensures that the echo sounder 100 can operate without interference from air bubbles 20 generated during navigation of the operation of the ship 10, thereby enabling accurate measurement of the depth of the seabed.

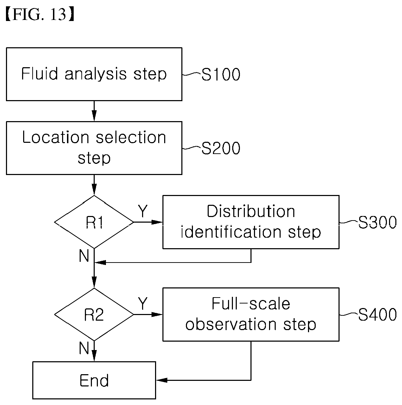

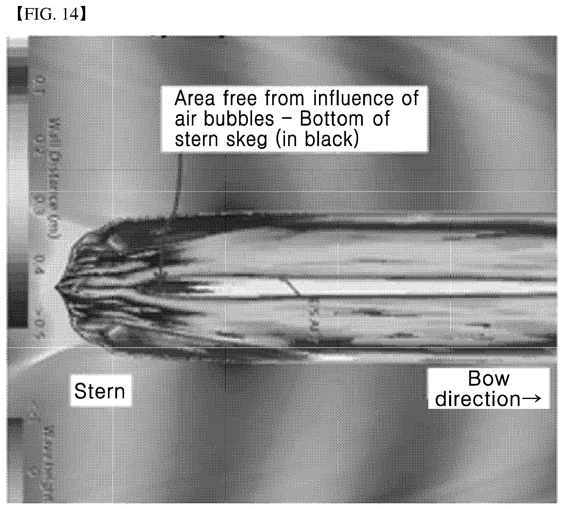

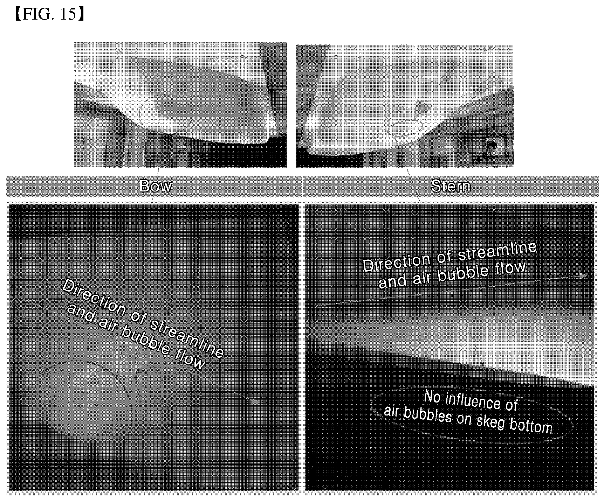

FIG. 13 is a block flow diagram illustrating a method of installing an echo sounder for ships according to the present invention, FIG. 14 is an analytical view illustrating a fluid analysis step of FIG. 13, and FIG. 15 is a photographic view illustrating a distribution identification step of FIG. 13.

Referring to FIG. 1 to FIG. 13, the method of installing an echo sounder for ships according to the present invention may include a fluid analysis step S100, a location selection step S200, a distribution identification step S300, and a full-scale observation step S400. In this way, a location on a ship 10 where a flow of air bubbles 20 is minimized can be selected as an optimal location for installation of the echo sounder.

In the fluid analysis step S100, a flow of air bubbles 20 entrained under the ship 10 is identified based on fluid analysis. The fluid analysis step S100 may be performed based on computational fluid dynamics (CFD) analysis. Thus, the flow of air bubbles 20 entrained under a bottom surface of the ship 10 can be clearly identified by color categorization.

In the location selection step S200, an installation location of the echo sounder is selected based on results of the fluid analysis step S100.

In the distribution identification step S300, the results of the fluid analysis step S100 are verified based on a distribution of air bubbles 20 on a hull surface under hydrodynamic flow conditions in a cavitation tunnel. The distribution identification step S300 may be performed through an air bubble 20 injection test. In this way, the distribution of air bubbles 20 on a scale model of the ship 10 can be identified prior to actual construction of the ship 10.

The distribution identification step S300 may be performed only when a determination R1 is made that the distribution identification step S300 is required, after completion of the location selection step S200.

In the full-scale observation step S400, the flow of air bubbles 20 around the echo sounder on the actual ship 10 is checked to solve problems causing malfunctions of the echo sounder. The full-scale observation step S400 may be performed based on images captured by an underwater camera.

The full-scale observation step S400 may be performed only when a determination R2 is made that normal operation of the echo sounder is disturbed due to influence of air bubbles 20 based on results of a sea trial, after completion of the distribution identification step S300. Thus, countermeasures can be prepared by comparatively analyzing the results of the CFD and air bubble 20 injection tests and the actual flow of air bubbles 20 on the ship 10.

Referring to FIG. 1 to FIG. 14, as a result of performing the fluid analysis step S100, a bottom of a skeg formed at the stern is marked in black, indicating that the corresponding location is free from influence of the flow of air bubbles 20. Accordingly, when the echo sounder is installed inside the skeg 200, the echo sounder can accurately measure a depth of the seabed without influence of the flow of air bubbles 20.

Referring to FIG. 1 to FIG. 13 and FIG. 15, as a result of performing the distribution identification step S300, it is confirmed that, at the bow, air bubbles 20 move down to the bottom of the ship. Conversely, it is confirmed that the bottom of the skeg at the stern is free from influence of air bubbles 20. Accordingly, when the echo sounder is installed inside the skeg 200, the echo sounder can accurately measure a depth of the seabed without influence of the flow of air bubbles 20.

The technical advantages provided by the method of installing an echo sounder for polar ships according to the present invention are as follows.

Since the polar ship 10 is designed such that the bow is inclined at a shallow angle with respect to the waterline in consideration of ice-breaking performance, the echo sounder can suffer from operational problems due to air bubbles 20 even when the echo sounder is installed at the forward end of the bow. If such operational problems are discovered only after construction of the ship 10, it can be difficult to establish effective countermeasures.

Accordingly, prior to construction of the ship 10, a location where a flow of air bubbles is minimized may be selected as an optimal location for installation of the echo sounder based on fluid analysis (computational fluid dynamics (CFD) analysis). In addition, prior to construction of the ship 10, the results of the fluid analysis may be verified by conducting an air bubble 20 injection test on a scale model of the ship 10 in a cavitation tunnel to identify a distribution of air bubbles 20 on the hull surface under hydrodynamic flow conditions.

The ship 10 is constructed after these steps. When a problem arises during actual operation of the echo sounder after construction of the ship 10, a difference from the results obtained in the steps performed before construction of the ship 10 may be examined to apply findings obtained therefrom to ships 10 to be constructed afterward.

An echo sounder according to this embodiment is intended for use in a polar ship 10, wherein the ship may include a skeg formed at a lower portion of a stern thereof. The echo sounder may be installed on the skeg.

A ship according to this embodiment, in which an angle between a bow profile and a waterline ranges from 10 degrees to 70 degrees, may include a skeg and an echo sounder. The skeg may be formed at a lower portion of a stern of the ship 10. The echo sounder may be installed on the skeg.

From the transverse cross-section of the polar ship of FIG. 9, it can be seen that the bottom of the ship is flat. Since the hull of the ship is wider and flatter than that of general merchant ships, air bubbles generated by bow waves or the like tend to flow to the bottom of the hull along an inclined surface of the hull. The present invention provides various solutions to address this problem. A ship to which the present invention is applied has a flat bottom region in transverse cross-section of the hull (preferably transverse cross-section taken at a center in a longitudinal direction of the hull), as shown in FIG. 9. The flat bottom region may correspond to a width of the ship minus twice a bilge radius of the ship. Preferably, the flat bottom region occupies 50% to 100% of the width of the ship, more preferably 60% to 98% of the width of the ship, still more preferably 75% to 95% of the width of the ship.

Although some embodiments have been described, it will be apparent to those skilled in the art that these embodiments are given by way of illustration only, and that various modifications, changes, alterations, and equivalent embodiments can be made without departing from the spirit and scope of the invention. Therefore, the accompanying claims and their equivalents are intended to cover such changes or modifications as would fall within the scope and spirit of the present invention.

## Claims

1. A polar ship comprising:
a plough formed at a lower portion of a bow of the ship; and
an echo sounder provided to the plough and configured to transmit ultrasonic pulses toward a seabed, receive the ultrasonic pulses reflected back from the seabed, and calculate a depth of the seabed based on a time taken for the ultrasonic pulses to return.

2. The polar ship according to claim 1, wherein the echo sounder comprises:
a sounder body; and
a bracket coupling the sounder body to a lower portion of the plough.

3. The polar ship according to claim 2, wherein the plough comprises:
a plough body; and
a plough through-hole formed at a lower portion of the plough body to provide a passage for ultrasonic pulses transmitted and received by the echo sounder unit to travel beyond the plough body.

4. The polar ship according to claim 1, wherein a lower end of the echo sounder is placed flush with a lower end of the plough in a height direction of the ship.

5. The polar ship according to claim 1, wherein the echo sounder is further provided inside a skeg of the ship.

6. The polar ship according to claim 1, wherein the plough comprises a flat region formed at a lower portion thereof.

7. The polar ship according to claim 1, wherein the plough is formed in a cut-off structure.

8. The polar ship according to claim 7, wherein the plough comprises a flat region formed on the cut-off structure.

9. The polar ship according to claim 1, wherein a bottom of the ship is formed in a flat shape.

10. The polar ship according to claim 9, wherein a flat region formed on the bottom of the ship occupies 50% to 100% of a width of the bottom of the ship in transverse cross-section of the ship.

11. An echo sounder used for a polar ship, wherein the echo sounder is installed on a plough formed at a lower portion of a bow of the ship.

12. The echo sounder according to claim 11, wherein the echo sounder is installed on a plough formed in a cut-off shape at the lower portion of the bow of the ship.

13. A ship in which an angle β between a waterline and a bow profile at a point at which the waterline meets the bow profile (forward perpendicular: FP) ranges from 10 degrees to 70 degrees, the ship comprising:
a plough formed at a lower portion of a bow of the ship; and
an echo sounder installed on the plough.

14. The ship according to claim 13, wherein the echo sounder is installed on the plough formed in a cut-off shape at the lower portion of the bow of the ship.
